(19) Europäisches Patentamt / European Patent Office / Office européen des brevets

(11) **EP 4 432 537 B1**

(12) **EUROPEAN PATENT SPECIFICATION**

(45) Date of publication and mention
of the grant of the patent:
**08.07.2026 Bulletin 2026/28**

(21) Application number: **23161480.1**

(22) Date of filing: **13.03.2023**

(51) International Patent Classification (IPC):
*H02M 1/34* *(2007.01)*

(52) Cooperative Patent Classification (CPC):
**H02M 1/348; H02M 1/088;** H02M 1/344

(54) **APPARATUS HAVING SERIES-CONNECTED SWITCHING DEVICES**

VORRICHTUNG MIT IN REIHE GESCHALTETEN SCHALTVORRICHTUNGEN

APPAREIL AVEC DISPOSITIFS DE COMMUTATION CONNECTÉS EN SÉRIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.09.2024 Bulletin 2024/38**

(73) Proprietor: **Hitachi Energy Ltd
8050 Zürich (CH)**

(72) Inventor: **Asoodar, Mohsen
164 56 Stockholm (SE)**

(74) Representative: **AWA Sweden AB
Box 45086
104 30 Stockholm (SE)**

(56) References cited:
**EP-A2- 1 145 411     CN-A- 104 135 141
US-A- 5 946 178       US-A1- 2005 041 348**

- **RUCHIRA WITHANAGE ET AL: "Series
Connection of Insulated Gate Bipolar Transistors
(IGBTs)", IEEE TRANSACTIONS ON POWER
ELECTRONICS, INSTITUTE OF ELECTRICAL
AND ELECTRONICS ENGINEERS, USA, vol. 27,
no. 4, 1 April 2012 (2012-04-01), pages 2204 -
2212, XP011422904, ISSN: 0885-8993, DOI:
10.1109/TPEL.2011.2167000**

**Description**

TECHNICAL FIELD

The present invention relates to an apparatus comprising a plurality of switching devices, such as semiconductor-based switching devices, connected in series.

BACKGROUND

In applications such as power transmission applications it may be desired to connect a plurality of switching devices, such as semiconductor-based switching devices, in series. One application where it may be desired to connect a plurality of switching devices in series is modular multilevel converters (MMCs). For example, in cascaded half-bridge MMCs, half-bridge submodules of the MMC are connected in series.

In general, connecting semiconductor-based switching devices in series has several advantages, such as (i) facilitating of allowing for creating a standardized solution with variable semiconductor device voltage, (ii) facilitating of allowing for using use relatively cheap semiconductor devices in order to make a high-power apparatus, (iii) facilitating for or allowing to create a reliable module with potential redundancies that reduce the downtime of the apparatus (e.g., a converter), and (iv) simplifying any system for protection of the apparatus, as the protection system can be slower and is only required to handle lower levels of energy as compared using another type of connection of the semiconductor-based switching devices than a series-connection. However, for semiconductor-based switching devices connected in series, it may be difficult to ensure that voltage over the semiconductor-based switching devices connected in series is shared equally between the switching devices during switching transients.

Examples of prior art may be found in US5946178 relating to a protective circuit for series-connected power semiconductors and in EP1145411 relating to power supplies having protection circuits.

SUMMARY

The invention is set out in the appended set of claims.

When semiconductor-based switching devices are connected in series, the voltage sharing between the switching devices may not occur naturally. Some solutions for addressing this, based on employing very fast dynamic feedback systems, have been proposed in the art. However, such solutions are not considered practical or as reliable solutions for industrial applications. Moreover, such solutions are generally not easily scalable or not scalable at all.

It is contemplated that the main causes for voltage mismatch between series-connected semiconductor-based switching devices during switching transients, i.e., for unequal voltages of the semiconductor-based switching devices during switching transients, are: (1) delay in the switching command to one or more semiconductor-based switching devices in relation to another or other semiconductor-based switching devices; (2) different characteristics, or spread in parameters, between different semiconductor-based switching devices; and (3) parasitic elements in the apparatus or system including the series-connected semiconductor-based switching devices. The aspects (2) and (3) may be very complicated to compensate for in practice. If left uncontrolled, the voltage over series-connected semiconductor-based switching devices may become unbalanced and diverge over time.

In view of the foregoing, a concern of the present invention is to provide means for facilitating or allowing for reducing or even avoiding the risk, in an apparatus including switching devices connected in series, of the voltage over the series-connected switching devices becoming unbalanced and diverging over time.

To address at least one of this concern and other concerns, an apparatus in accordance with the independent claim is provided. Preferred embodiments are defined by the dependent claims.

According to an aspect of the present invention, an apparatus is provided. The apparatus comprises a plurality of interconnected switching devices. Each of the switching devices is switchable between operational states including at least a conducting state and a non-conducting state. At least two of the switching devices are connected in series so as to form at least one series-connection of switching devices. The apparatus is connected or connectable in a conductive path for conveying a current in the conductive path via the at least one series-connection of switching devices. The apparatus comprises a plurality of switching device voltage balancing circuits (VBCs). Each of the VBCs corresponds to and is connected to a respective switching device of the at least one series-connection of switching devices. The plurality of VBCs are for limiting the maximum voltage that each switching device of the at least one series-connection of switching devices is subjected to. Each of the plurality of switching device VBCs comprises an electrical energy storage (EES) module which can be charged or discharged, a resistive current path comprising at least one resistor, and at least one EES module voltage regulating circuitry (VRC) connected or connectable to the EES module. The at least one EES module VRC is configured such that it conducts current therethrough in a direction towards the at least one resistor when the voltage over the at least one EES module VRC is within a predefined threshold voltage range. Each of the plurality of switching device VBCs is configured such that when the corresponding switching device is in the conducting state, the resistive current path becomes connected in parallel with the EES module, whereby, on a condition that the voltage of the EES module is within the predefined threshold voltage range, current is conducted from the EES module to the at least one resistor via the at least one EES module VRC such that the voltage of the EES module is decreased until the voltage of EES module is outside the threshold voltage range. Each or any of the plurality of switching device VBCs may be connected in parallel with the corresponding switching device. Also, each switching device may be singular or a parallel connection of switching devices. Moreover, the design may comprise parallel connection of strings of series connected switching devices, where each of the series connected switching devices may have one or more switching device VBCs.

While the EES module may be referred to and described herein as a capacitor, it is to be understood that more than one capacitor and/or another or other types of EES modules than capacitors may possibly be used. Thus, even if the EES module may be referred to herein as a capacitor, the disclosure herein may be applicable in the same way or similarly for other types of EES modules than capacitors.

By the above-mentioned configuration of each of the switching device VBCs such that when the corresponding switching device is in the conducting state, voltage of the EES module can be decreased until the voltage of EES module is outside the threshold voltage range, it may be ensured that the voltage over each switching device of the at least one series-connection of switching devices does not go beyond a certain value. Thus, by means of the switching device VBCs of the apparatus, the maximum voltage that each switching device of the at least one series-connection of switching devices may be subjected to can be controlled, or limited. As per the description in the foregoing, the maximum voltage is defined or governed by the predefined threshold voltage range of the at least one EES module VRC of the respective ones of the switching device VBCs. Thereby, the apparatus provides a self-triggered passive circuit for effective voltage control or limitation of series-connected switching devices, and has little or no need for any active closed loop control or measurement feedback. The voltage control or limitation of the series-connected switching devices can be carried out regardless of the cause of voltage mismatch between the series-connected switching devices during switching transients. Further, the apparatus is easily scalable to in principle any number of series-connected switching devices.

The EES module of each switching device VBC may 'contain' the switching transients of the corresponding switching device. In other words, the EES modules of the respective ones of the switching device VBCs may isolate the switching transients of each switching device from the other switching devices. Hence, in the presence of parasitic elements in the apparatus and different characteristics, or spread in parameters, between different switching devices, any voltage mismatch between the series-connected switching devices after every switching instance may be reduced. By means of the provisioning of the EES module of each switching device VBC, there may be no or only very little need for actively compensating for the dynamics of switching the switching device between different operational states, for delays in the switching commands to one or more switching devices in relation to another or other switching devices, for different characteristics or spread in parameters between different ones of the switching devices, and for any parasitic elements in the apparatus. Further, the configuration of the switching device VBCs may entail only relatively little additional losses, compared to, e.g., instead using passive snubbers as known in the art, which are prone to relatively large losses. This is at least due to that only a relatively small portion of the energy in the EES modules of the switching device VBCs may need to be dissipated each switching event or period, whereas for passive snubbers, in general all or most of the energy in the EES module is dissipated each switching event or period. For example, in case of employing capacitors for the EES modules, e.g., only relatively small capacitances of the EES modules in comparison to the capacitance of a main capacitor of the conductive path (e.g., a main capacitor of a DC link) may be required.

The apparatus may be employed in different applications. For example, the apparatus may be employed in or be included in a converter configured to convert direct current (DC) power to alternating current (AC) power, or AC power to DC power. The plurality of interconnected switching devices may for example be comprised in a modular multilevel converter (MMC). In a cascaded half-bridge or full-bridge MMC, half-bridge or full-bridge submodules of the MMC are connected in series. The plurality of interconnected switching devices may for example be comprised in half-bridge or full-bridge submodules of an MMC.

In the context of the present application, by a non-conducting state of the switching device or switching element it is meant a state where there is no or only very little conduction of current through the switching device or switching element. Thus, the switching device or switching element may be switchable so as to stop, or substantially stop, the switching device or switching element from conducting current through the switching device or switching element.

Each or any of the switching devices may be of a type comprising more than two terminals. For example, each or any of the switching devices may for example comprise at least a first terminal and a second terminal, and may be arranged such that current flows in a current path of the switching device between the first terminal and the second terminal at least when the switching device is in the conducting state. Each of the plurality of switching device VBCs may be connected to the first and second terminals (if any) of the corresponding switching device.

Further objects and advantages of the present invention are described in the following by means of exemplifying embodiments. It is noted that the present invention relates to all possible combinations of features recited in the claims. Further features of, and advantages with, the present invention will become apparent when studying the appended claims and the description herein. Those skilled in the art realize that different features of the present invention can be combined to create embodiments other than those described herein.

BRIEF DESCRIPTION OF THE DRAWINGS

Exemplifying embodiments of the present invention will be described below with reference to the accompanying drawings.

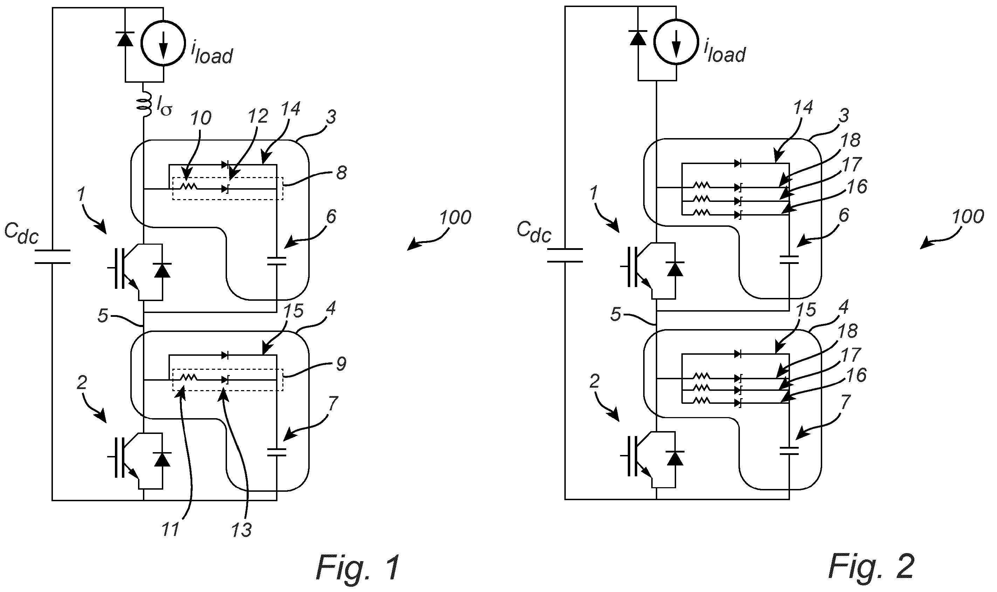

Figures 1 to 5 are schematic views of an apparatus according to embodiments of the present invention.

All the figures are schematic, not necessarily to scale, and generally only show parts which are necessary in order to elucidate embodiments of the present invention, wherein other parts may be omitted or merely suggested.

DESCRIPTION WITH REFERENCE TO THE DRAWINGS

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments are provided by way of example so that this disclosure will convey the scope of the present invention to those skilled in the art.

Figure 1 is a schematic view of an apparatus 100 according to an embodiment of the present invention. The apparatus 100 comprises a plurality of interconnected switching devices, wherein at least two of the switching devices are connected in series so as to form at least one series-connection of switching devices. Each of the switching devices is switchable between operational states including at least a conducting state and a non-conducting state. Each or any of the switching devices may for example comprise or be constituted by at least one of: one or more field-effect transistors (FETs), one or more bipolar junction transistors (BJTs), or one or more insulated-gate bipolar transistors (IGBTs), or one or more of other types of semiconductive switches. The one or more FETs may for example comprise one or more metal-oxide semiconductor FETs (MOSFETs).

In accordance with the embodiment of the present invention illustrated in Figure 1 (and also the embodiments of the present invention illustrated in the other figures), the apparatus 100 comprises two switching devices 1, 2 which are connected in series so as to form a series-connection of switching devices. However, it is to be understood that the number of switching devices in the apparatus according to the illustrated embodiments of the present invention is according to an example, and that the apparatus 100 may comprise in principle any number of switching devices (e.g., three, four, five, six, eight, ten, twenty, fifty, or a hundred or more), and which switching devices are connected in series so as to form at least one series-connection of switching devices. Thus, the switching devices in any embodiment of the present invention could be connected in series to form several series connections of switching device, such as, for example, two series-connections of switching devices, with different series-connections of switching devices for example being connected in parallel (for example, all series-connections of switching devices could be connected in parallel). It is to be understood that while reference may be made herein to "the at least one series-connection of switching devices 1, 2", or "series-connection of switching devices 1, 2", this is for description of exemplifying embodiments of the present invention and is not to be construed limiting and meaning that the apparatus 100 is limited to only including two switching devices.

Further, while the switching devices according to the illustrated embodiments of the present invention are constituted by single switching elements, other configurations are possible. For example, at least one switching device of the at least one series-connection of switching devices may comprise a plurality of sub-switching devices (or switching elements) connected in parallel, wherein each of the sub-switching devices may be controllably switchable between operational states including at least a conducting state and a non-conducting state. Each or any of such sub-switching devices may for example comprise or be constituted by at least one of: one or more FETs (e.g., MOSFETs), one or more BJTs, or one or more IGBTs.

As illustrated in Figure 1, the apparatus 100 is connected in a conductive path 5 for conveying a current in the conductive path 5 via the at least one series-connection of switching devices 1, 2. In one or more embodiments of the present invention, the apparatus 100 may be connectable in the conductive path 5. The conductive path 5 may be between a first node and a second node (not illustrated in Figure 1 or in any of the other figures), and the switching devices 1, 2 may be connected between the first and second nodes. The apparatus 100 may be connected or connectable in the conductive path 5 for conveying a current from the first node to the second node via the at least one series-connection of switching devices 1, 2. A voltage between the first node and the second node may be referred to as direct current (DC) link voltage. The current conveyed in the conductive path 5 may for example be derived or estimated based on a load current, $i_{load}$, as indicated in Figure 1.

The apparatus 100 comprises a plurality of switching device voltage balancing circuits (VBCs), each of which corresponds to and is connected to a respective switching device of the at least one series-connection of switching devices. The plurality of VBCs are for limiting the maximum voltage that each switching device 1,2 of the at least one series-connection of switching devices 1, 2 is subjected to. Since in accordance with the embodiment of the present invention illustrated in Figure 1 (and also the embodiments of the present invention illustrated in the other figures), the apparatus 100 comprises two switching devices 1, 2 which are connected in series so as to form a series-connection of switching devices, the apparatus 100 illustrated in Figure 1 comprises two switching device VBCs 3, 4 which correspond to different ones of the switching devices 1, 2. As illustrated in Figure 1, in accordance with the illustrated embodiment, the switching device VBC 3 corresponds to the switching device 1, and the switching device VBC 4 corresponds to the switching device 2. However, if the apparatus 100 would comprise more than two switching devices, such as also described in the foregoing, the apparatus 100 would also comprise more than two switching device VBCs.

Each of the switching device VBCs 3, 4 comprises an electrical energy storage (EES) module 6, 7 which can be charged or discharged. Each of the switching device VBCs 3, 4 comprises a resistive current path 8, 9 comprising at least one resistor 10, 11, and at least one EES module voltage regulating circuitry (VRC) 12, 13, which is connected or connectable to the EES module 6, 7.

For each of the switching device VBCs 3, 4, the at least one EES module VRC 12, 13 is configured such that it conducts current therethrough in a direction towards the at least one resistor 10, 11 when the voltage over the at least one EES module VRC 12, 13 is within a predefined threshold voltage range (e.g., a predefined threshold voltage range of the at least one EES module VRC 12, 13).

In accordance with the illustrated embodiment, the switching device VBC 3 corresponds to the switching device 1, and the switching device VBC 4 corresponds to the switching device 2. Thereby, the EES module VRC 12 corresponds to the switching device 1, and the EES module VRC 13 corresponds to the switching device 2.

Each of the plurality of switching device VBCs 3, 4 is configured such that when the corresponding switching device 1, 2 is in the conducting state the resistive current path 8, 9 becomes connected in parallel with the EES module 6, 7, whereby, on a condition that the voltage of the EES module 6, 7 is within the predefined threshold voltage range, current is conducted from the EES module 6, 7 to the at least one resistor 10, 11 via the at least one EES module VRC 12, 13 such that the voltage of the EES module 6, 7 is decreased until the voltage of EES module 6, 7 is outside the threshold voltage range. By the current being conducted from the EES module 6, 7 to the at least one resistor 10, 11 via the at least one EES module VRC 12, 13, 'excess' voltage of the EES module 6, 7 can be discharged safely in the at least one resistor 10, 11 as well as in the at least one EES module VRC 12, 13.

As mentioned, each of the switching devices 1, 2 is switchable between operational states including at least a conducting state and a non-conducting state. For example, each of the switching devices 1, 2 may comprise at least a first terminal, a second terminal, and a third terminal and being arranged such that current may flow in a current path between the first terminal and the second terminal, and further such that the third terminal governs the electrical conductivity of the current path between the first terminal and the second terminal based on voltage at the third terminal relatively to the voltage at the second terminal. Each of the switching devices 1, 2 may be arranged such that current flows unimpeded from the first terminal to the second terminal in the current path between the first terminal and the second terminal if the voltage at the third terminal relatively to the voltage at the second terminal is within a predefined switching device threshold voltage range. For example, if each or any of the switching devices 1, 2 comprises a FET, the predefined switching device threshold voltage range may be defined by a threshold voltage of the FET. In alternative or in addition, if each or any of the switching devices 1, 2 comprises a BJT, the predefined switching device threshold voltage range may be defined by a threshold voltage of the BJT. In alternative or in addition, if each or any of the switching devices 1, 2 comprises a an IGBT, the predefined switching device threshold voltage range may be defined by a threshold voltage of the IGBT.

Thus, each of the switching devices 1, 2 may be switchable between operational states including at least a conducting state and a non-conducting state for example by means of providing a voltage pulse altering the voltage at the third terminal of the switching device relatively to the voltage at the second terminal of the switching device. In general, each of the switching devices 1, 2 may be switchable between operational states for example by being provided with a switching command to switch into the non-conducting state, which may be referred to as a turn-off switching command, or a switching command to switch into the conducting state, which may be referred to as a turn-on switching command. The switching command(s) may, e.g., comprise a voltage pulse as described in the foregoing. In the following the terms turn-off switching command and turn-on switching command may be used in relation to describe the switching of the switching devices 1, 2 between different operational states such as into the non-conducting state or into the conducting state, with no loss of generality.

The capacitor illustrated in Figure 1 which is connected in parallel with the switching devices 1, 2, indicated by its capacitance $c_{dc}$, may be referred to as a (main) DC link capacitor.

In order to describe principles of one or more embodiments of the present invention, the case where the switching device VBCs 3, 4 do not include the resistive current paths 8, 9 can first be assumed.

When a turn-off switching command is provided to both of the switching devices 1, 2, the two switching devices 1, 2 may turn off (i.e., attain the non-conducting state) at slightly different times. Assuming that the switching device 1 turns off before the switching device 2, and that the current in the conductive path 5 is positive, the voltage of the EES module 6 will conduct the current until the switching device 2 has been turned off as well. The time delay between the instances of voltage rises between the two switching devices 1, 2 together with the current in the conductive path 5 at the time of switching defines a difference between the voltage $V_1$ of the EES module 6 and the voltage $V_2$ of the EES module 7 at the end of the turn off. The time delay can be defined by a time difference between two time instants $t_1$ and $t_2$. Specifically, the difference between the voltage $V_1$ of the EES module 6 and the voltage $V_2$ of the EES module 7 after the turn-off is governed by the following relation between $V_1$, $V_2$ and the current $i_c$ in the conductive path 5:

$$V_1 - V_2 = \frac{1}{c} \int_{t_1}^{t_2} i_c(t) dt$$

In this relation, it has been assumed that $i_c > 0$ and $t_2 > t_1$, that each of the EES module 6 and the EES module 7 is a capacitor, and that the capacitance of the EES module 6 and the capacitance of the EES module 7 are the same and equal to c. However, it is to be understood that the above relation is intended to describe principles of one or more embodiments of the present invention, and that it is not required for the capacitance of the EES module 6 and the capacitance of the EES module 7 to be the same. Simulations carried out by the inventor have shown that a difference between the capacitance of the EES module 6 and the capacitance of the EES module 7 of up to at least 20% is acceptable.

The current $i_c$ in the conductive path 5 may for example be sensed directly by means of one or more current sensors (not shown in Figure 1) configured to sense the current in the conductive path 5. In alternative or in addition, the current $i_c$ in the conductive path 5 could be derived or estimated based on one or more current sensors (not shown in Figure 1) configured to sense the load current $i_{load}$ which is indicated in Figure 1. The load current $i_{load}$ may be representative of a current of an electrical load or device connected or connectable to the apparatus 100.

Aside from the voltage differences between the voltage of the EES module 6 and the voltage of the EES module 7, after every turn-off of the switching devices 1, 2, the energy of the stray inductance, represented by $I_\sigma$ in Figure 1, will be buffered in the EES module 6 and the EES module 7 as well. This energy buffering occurs after all of the switching devices 1, 2 have been turned off. Hence, the transfer of energy from $I_\sigma$ to the EES module 6 and the EES module 7 may create a common mode voltage rise (equal voltage rise among all of the EES module 6 and the EES module 7). In fact, the EES module 6 and the EES module 7 together with any parasitic inductance of the conductive path 5 may create a natural boost converter. Hence, in absence of the resistive current paths 8, 9 in the switching device VBCs 3, 4, uncontrolled voltages on the EES module 6 and the EES module 7 may be increasing after every turn off (assuming that the EES module 6 and the EES module 7 are low in losses, which is a reasonable assumption).

Similar to the turn off case, a different turn-on instance can cause a voltage difference between the voltage of the EES module 6 and the voltage of the EES module 7. For instance, if the switching device 1 is turned on earlier than the switching device 2, the voltage difference between the voltage of the EES module 6 and the voltage of the EES module 7 is governed by the following relation:

$$V_1 - V_2 = -\frac{1}{c} \int_{t_1}^{t_2} i_c(t) dt$$

Again, it has been assumed that $i_c > 0$ and $t_2 > t_1$, that each of the EES module 6 and the EES module 7 is a capacitor, and that the capacitance of the EES module 6 and the capacitance of the EES module 7 are the same and equal to c.

In both cases, the voltage of the EES module 6 and the voltage of the EES module 7 would be increasing. In the turn off, the voltage of the EES module 6 increases and in the turn on the voltage of the EES module 7 increases. Hence, as long as the current in the conductive path 5 is positive, both the voltage of the EES module 6 and the voltage of the EES module 7 will increase until at least one of them takes on the entire voltage of the conductive path 5 (e.g., the DC link voltage). In practice, the situation may be even more complex. The turn-on and turn-off delays are not necessarily the same. Also, these values can change over time, and may be different from one particular system to another.

However, as described herein, by means of the inclusion of the resistive current paths 8, 9 of the switching device VBCs 3, 4, the maximum voltage that each of the EES module 6 and the EES module 7 may be subjected to can be controlled, or limited, over time. As a result, a robust system for controlling or limiting the maximum voltage that each of the switching devices 1, 2 may be subjected to, over time, can be achieved.

In accordance with the embodiment of the present invention illustrated in Figure 1, each of the plurality of switching device VBCs 3, 4 is configured such that when the corresponding switching device 1, 2 is in the non-conducting state, no current, or only a very small current, is conducted in the resistive current path 8, 9 of the switching device VBC 12, 13. Such configuration may be implemented in different ways. For example, in accordance with the embodiment of the present invention illustrated in Figure 1, each of the plurality of switching device VBCs 3, 4 may comprise a one-way conducting circuitry 14, 15, which may be connected in parallel with the resistive current path 8, 9 of the switching device VBC 3, 4. As mentioned, when the voltage over the at least one EES module VRC 12, 13 is within the predefined threshold voltage range, the at least one EES module VRC 12, 13 conducts current therethrough in a direction in the resistive current path 8, 9 towards the at least one resistor 10, 11. Thereby, when the switching device 1, 2 is in the conducting state, current goes from the EES module 6, 7 of the corresponding switching device VBC 3, 4 towards the switching device 1, 2. When the switching device 1, 2 is in the non-conducting state, current is conducted in the one-way conducting circuitry 14, 15 of the corresponding switching device VBC 3, 4, towards the EES module 6, 7 of switching device VBC 3, 4, thereby charging the EES module 6, 7 of the switching device VBC 3, 4 when the corresponding switching device 1, 2 is in the non-conducting state. For each of the plurality of switching device VBCs 3, 4, the parallel connection of the one-way conducting circuitry 14, 15 and the resistive current path 8, 9 may be connected in series with the EES module 6, 7 of the switching device VBC 3, 4. As illustrated in Figure 1, for each of the plurality of switching device VBCs 3, 4, the one-way conducting circuitry 14, 15 may be configured so as to conduct current in a certain direction by including one or more diodes. As mentioned, each of the plurality of switching device VBCs 3, 4 may be configured such that when the corresponding switching device 1, 2 is in the non-conducting state, no current - or only a very small current - may be conducted in the resistive current path 8, 9 of the switching device VBC 3, 4. Thus, in the context of the present application, by no current being conducted in the resistive current path 8, 9 of the switching device VBC 3, 4 when the corresponding switching device 1, 2 is in the non-conducting state, it may be meant that substantially no current is conducted in the resistive current path 8, 9, but not necessarily that no current whatsoever is conducted in the resistive current path 8, 9 (which however may be the case).

Further in accordance with the embodiment of the present invention illustrated in Figure 1, for each of the plurality of switching device VBCs 3, 4, the at least one EES module VRC 12, 13 may comprise at least one Zener diode. The predefined threshold voltage range of the at least one EES module VRC 12, 13 may be defined by a value of a breakdown voltage of the at least one Zener diode. For example, an end value of the predefined threshold voltage range may be the value of the breakdown voltage of the at least one Zener diode. In that case, the predefined threshold voltage range may be any voltage equal to or exceeding the breakdown voltage.

Possibly, the predefined threshold voltage range of the at least one EES module VRC 12, 13 may be the same for each of the plurality of switching device VBCs 3, 4.

According to one implementation example, for each of the plurality of switching device VBCs 3, 4, the at least one EES module VRC 12, 13 comprises a Zener diode selected so as to have a breakdown voltage of, e.g., 500 V. At each turn off and turn on transient, the voltages of the EES modules 6, 7 of the switching device VBCs 3, 4 may rise and diverge. However, after the turn on transient, the Zener diode goes into breakdown mode of operation and the excess voltage (anything over the breakdown voltage, in this example 500 V) is removed from the EES modules 6, 7 of the switching device VBCs 3, 4. Hence, in this example, after the turn on event, for all series-connected switching devices 1, 2 the EES module 6, 7 of the corresponding switching device VBC 3, 4 may have a voltage of 500 V or less.

As mentioned, the conductive path 5 may be between a first node and a second node, and the apparatus 100 may be connected or connectable in the conductive path 5 for conveying a current from the first node to the second node via the at least one series-connection of switching devices 1, 2. For each of the plurality of switching device VBCs 3, 4, the at least one EES module VRC 12, 13 may be configured such that the predefined threshold voltage range includes a voltage determined by the voltage between the first node and the second node divided by the number of switching devices in the at least one series-connection of switching devices 1, 2 which includes the switching device which corresponds to switching device VBC 3, 4. As mentioned, a voltage between the first node and the second node may be referred to as the DC link voltage. For each of the plurality of switching device VBCs 3, 4, the predefined threshold voltage range of the at least one EES module VRC 12, 13 may hence include a voltage determined by the DC link voltage divided by the number of switching devices in the at least one series-connection of switching devices 1, 2 which includes the switching device which corresponds to switching device VBC 3, 4.

Further in accordance with the embodiment of the present invention illustrated in Figure 1, each of the plurality of switching device VBCs 3, 4 may be connected in parallel with the corresponding switching device 1, 2 of the at least one series-connection of switching devices 1, 2.

Further in accordance with the embodiment of the present invention illustrated in Figure 1, for each of the plurality of switching device VBCs 3, 4, the at least one resistor 10, 11 and the at least one EES module VRC 12, 13 may be connected in series in the resistive current path 8, 9.

While Figure 1 illustrates each of the EES modules 6, 7 as a capacitor, it is to be understood that more than one capacitor and/or another or other types of EES module than capacitor may possibly be used. Thus, even if the EES modules 6, 7 are illustrated in Figure 1 as capacitors, the disclosure herein may be applicable in the same way or similarly for other types of EES modules than capacitors.

Figure 2 is a schematic view of an apparatus 100 according to an embodiment of the present invention. The apparatus 100 illustrated in Figure 2 is similar to the apparatus 100 illustrated in Figure 1, and the same reference numerals in Figures 1 and 2 denote the same or similar components, having the same or similar function.

The apparatus 100 illustrated in Figure 2 differs from the apparatus 100 illustrated in Figure 1 in that for each of the plurality of switching device VBCs 3, 4 in the apparatus 100 illustrated in Figure 2, the resistive current path comprises a plurality of resistive current sub-paths 16-21 connected in parallel. Each of plurality of resistive current sub-paths 16-21 comprises at least one resistor and at least one EES module VRC, similar to the resistive current paths 8, 9 of the switching device VBCs 3, 4 in the apparatus 100 illustrated in Figure 1. As illustrated in Figure 2, the resistive current path of the switching device VBC 3 comprises three resistive current sub-paths 16-18, and the resistive current path of the switching device VBC 4 comprises three resistive current sub-paths 19-21. It is to be understood that the number of resistive current sub-paths in the respective ones of the switching device VBCs 3, 4 is according to an example, and that each of the switching device VBCs 3, 4 may include in principle any number of resistive current sub-paths connected in parallel.

Provisioning of several resistive current sub-paths connected in parallel instead of a single resistive current path may improve thermal management capability of the apparatus 100. With reference to Figure 1, despite the presence of the at least one resistor 10, 11 in the resistive current paths 8, 9, the majority of the losses in the switching device VBCs 3, 4 may occur in the EES modules VRC 12, 13 (e.g., comprising Zener diodes). This is because for the same current passing through the at least one resistor 10, 11 and the EES modules VRC 12, 13, the EES modules VRC 12, 13 may be blocking a much higher voltage, resulting in higher conduction losses. By providing several resistive current sub-paths connected in parallel instead of a single resistive current path, as illustrated in Figure 2, each of the at least one EES module VRCs of the resistive current sub-paths may only need to block a relatively low voltage.

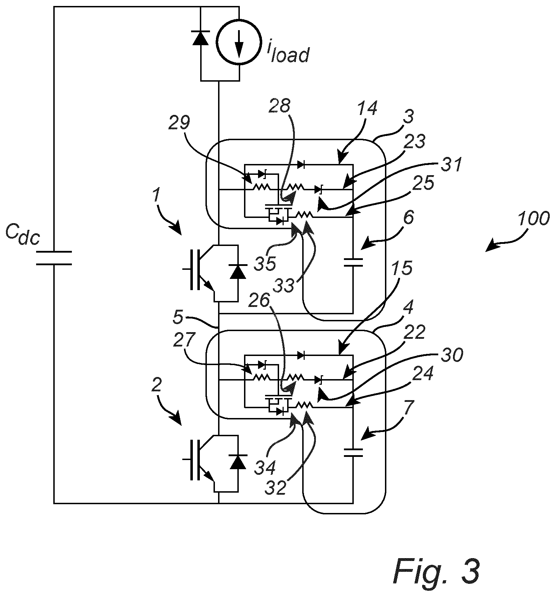

Figure 3 is a schematic view of an apparatus 100 according to an embodiment of the present invention. The apparatus 100 illustrated in Figure 3 is similar to the apparatus 100 illustrated in Figure 1, and the same reference numerals in Figures 1 and 3 denote the same or similar components, having the same or similar function.

Compared to the apparatus 100 illustrated in Figure 1, the resistive current paths of the switching device VBCs are configured differently in the apparatus 100 illustrated in Figure 3. In accordance with the embodiment of the present invention illustrated in Figure 3, for each of the plurality of switching device VBCs 3, 4, the resistive current path comprises a first current path 22, 23 and a second current path 24, 25. The first current path 22, 23 comprises at least one resistor 26-27, 28-29 and at least one EES module VRC 30, 31, and the second current path 24, 25 comprises at least one resistor 32, 33 and a switching element 34, 35. The first current path 22, 23 and the second current path 24, 25 are connected in parallel.

In the apparatus 100 illustrated in Figure 3, the switching device VBC 4 comprises a first current path 22 and a second current path 24, with the first current path 22 comprising a resistor 26 and an EES module VRC 30, and with the second current path 24 comprising a resistor 32 and a switching element 34. Further, the switching device VBC 3 comprises a first current path 23 and a second current path 25, with the first current path 23 comprising a resistor 28 and an EES module VRC 31, and with the second current path 25 comprising a resistor 33 and a switching element 35.

For each of the switching device VBCs 3, 4, the switching element 34, 35 of the second current path 24, 25 comprises at least a first terminal, a second terminal, and a third terminal and being arranged such that current may flow in a current path between the first terminal and the second terminal, and further such that the third terminal governs the electrical conductivity of the current path between the first terminal and the second terminal based on voltage at the third terminal relatively to the voltage at the second terminal. To that end, for each of the plurality of switching device VBCs 3, 4, the switching element 34, 35 of the second current path 24, 25 may for example comprises at least one of: a FET (e.g., a MOSFET), an BJT, or an IGBT. For each of the switching device VBCs 3, 4, the switching element 34, 35 of the second current path 24, 25 may be arranged such that current flows unimpeded from the first terminal to the second terminal in the current path between the first terminal and the second terminal if the voltage at the third terminal relatively to the voltage at the second terminal is within a predefined switching element threshold voltage range. The predefined switching element threshold voltage range may for example be defined by a threshold voltage of any FET, BJT and/or IGBT which may be included in the switching element 34, 35.

For each of the switching device VBCs 3, 4, on a condition that the voltage of the EES module 6, 7 is within the predefined threshold voltage range, current is conducted from the EES module 6, 7 to the at least one resistor 26-27, 28-29 of the first current path 22, 23 via the at least one EES module VRC 30, 31 of the first current path 22, 23 such that the voltage of the EES module 6, 7 is decreased. The switching element 34, 35 of the second current path 24, 25 is connected to the at least one resistor 26-27, 28-29 of the first current path 22, 23 such that when current is conducted in the at least one resistor 26-27, 28-29 of the first current path 22, 23, the voltage at the third terminal of the switching element 34, 35 relatively to the voltage at the second terminal of the switching element 34, 35 increases, and wherein on a condition that the voltage at the third terminal relatively to the voltage at the second terminal is within the predefined switching element threshold voltage range, current is conducted from the EES module 6, 7 to the at least one resistor 32, 33 of the second current path 24, 25 via the switching element 34, 35 such that the voltage of the EES module 6, 7 is decreased.

The first current path 22, 23 may be considered as a 'trigger' for the activation or use of the second current path 24, 25. While voltage of the EES module 6, 7 is decreased by current being conducted from the EES module 6, 7 to the at least one resistor 26-27, 28-29 of the first current path 22, 23, the main contribution to the voltage decrease of the EES module 6, 7 may be caused by current being conducted from the EES module 6, 7 to the at least one resistor 32, 33 of the second current path 24, 25 via the switching element 34, 35 after the second current path 24, 25 has been 'triggered' for activation or use by current being conducted from the EES module 6, 7 to the at least one resistor 26-27, 28-29 of the first current path 22, 23.

According to one implementation example of, e.g., the switching device VBC 3, the EES module VRC 31 of the first current path 23 may be a Zener diode, and the switching element 35 of the second current path 25 may include or be a MOSFET. When the switching device 1 is turned on, if the voltage of the EES module 6 is higher than the breakdown voltage of the Zener diode of the EES module VRC 31, current will be conducted from the EES module 6 to the resistor 28 of the first current path 23. The excess voltage on the EES module 6 may mainly 'drop' on the resistor 28 and the gate-source voltage of the MOSFET of the switching element 35 will rise. When the gate-source voltage of the MOSFET of the switching element 35 exceeds the threshold voltage of the MOSFET of the switching element 35, the MOSFET of the switching element 35 will switch on and conduct current, and create a self-triggered bypass circuit for the EES module 6. The voltage of the second current path 25 may be mainly over the resistor 33 rather than the MOSFET of the switching element 35. Thereby, heat dissipation may occur predominantly in the resistor 33. Consequently, the MOSFET of the switching element 35 may not require any special cooling mechanism. For the resistor 33 a cooling mechanism such as a heatsink may be advantageous, but no forced cooled should be needed. The resistor 33 may for example comprise or be constituted by a power resistor with prebuilt heatsinks, which as such is known in the art. When the voltage of the EES module 6 becomes lower than the breakdown voltage of the Zener diode of the EES module VRC 31, current conduction from the EES module 6 to the resistor 28 of the first current path 23 stops, and shortly thereafter the MOSFET of the switching element 35 will switch off and not conduct current. Effectively, the first and second current paths 23 and 25 create a high-power Zener diode using lower-power components. In addition or in alternative to a MOSFET, the switching element 35 may include a BJT and/or a similar semiconductor component. The switching element 35 may be rated for only a relatively small current, such as a few Amperes and for example a maximum of 10 A, and may be implemented a relatively small surface mounted device (SMD), whereas the switching device 1 may be rated for a much larger current, such as 1 kA or higher. The switching device VBC 4 and/or any other switching device VBC which may be included in the apparatus 100 may be configured in the same or similar manner as the switching device VBC 3 according to the implementation example described above.

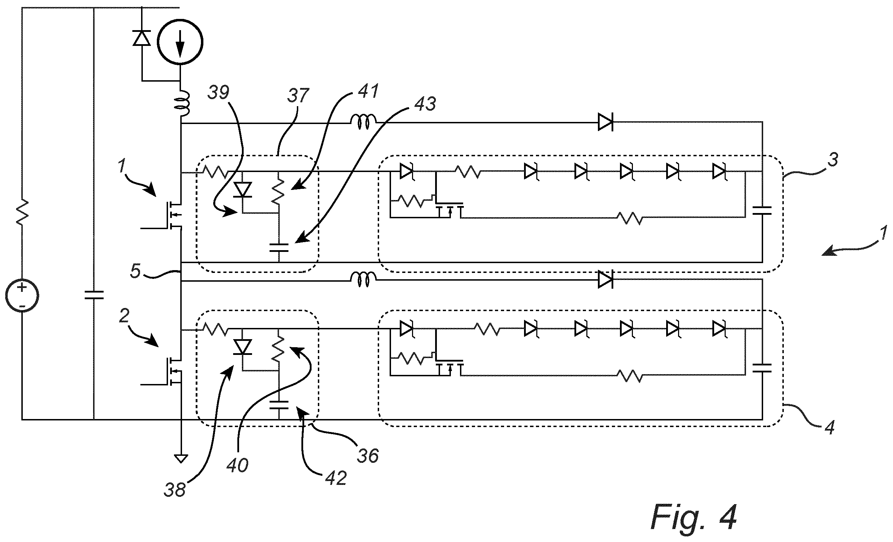

Figure 4 is a schematic view of an apparatus 100 according to an embodiment of the present invention. The apparatus 100 illustrated in Figure 4 is similar to the apparatus 100 illustrated in Figure 3, and the same reference numerals in Figures 3 and 4 denote the same or similar components, having the same or similar function.

The apparatus 100 illustrated in Figure 4 differs from the apparatus 100 illustrated in Figure 3 in that each of the plurality of switching device VBCs 3, 4 is connected in parallel with snubber circuitry 36, 37 comprising a series connection of: (i) a parallel connection of one-way conducting circuitry 38, 39 and a resistive current path 40, 41, and (ii) at least one EES module 42, 43.

As illustrated in Figure 4, the switching device VBC 3 is connected in parallel with snubber circuitry 37 comprising a series connection of: (i) a parallel connection of one-way conducting circuitry 39 and a resistive current path 41, and (ii) at least one EES module 43. And the switching device VBC 4 is connected in parallel with snubber circuitry 36 comprising a series connection of: (i) a parallel connection of one-way conducting circuitry 38 and a resistive current path 40, and (ii) at least one EES module 42. Each of any of the one-way conducting circuitries 38 and 39 may for example comprise or be implemented by means of one or more diodes, as illustrated in Figure 4. Each or any of the resistive current paths 40 and 41 may for example comprise one or more resistors, as illustrated in Figure 4.

In accordance with the embodiment of the present invention illustrated in Figure 4, for each of the plurality of switching device VBCs 3, 4, the corresponding snubber circuitry 36, 37 may be arranged between the switching device VBC 3, 4 and the switching device 1, 2 of the at least one series-connection of switching devices 1, 2 corresponding to the switching device VBC 3, 4.

The apparatus 100 illustrated in Figure 4 differs from the apparatus 100 illustrated in Figure 3 further in that there are provided several EES module VRCs in the first current paths, whereas in the apparatus 100 illustrated in Figure 3, there is provided one EES module VRC 30, 31 in the respective ones of the first current paths 22, 23. However, this is not required, and each the first current paths could comprise only one EES module VRC.

It is to be understood that even if the snubber circuitry 36, 37 is described herein and illustrated with reference to a configuration of the resistive current paths of the switching device VBCs as illustrated in Figure 3, the snubber circuitry 36, 37 may be incorporated or implemented in any embodiment of the present invention which may have a different configuration of the resistive current paths than illustrated in Figure 3, such as, for example, in the embodiments of the present invention illustrated in Figure 1 or 2.

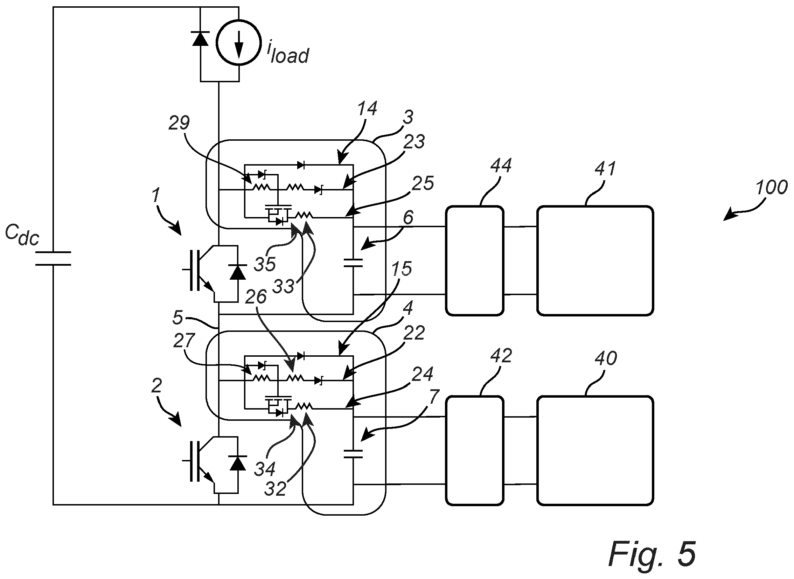

Figure 5 is a schematic view of an apparatus 100 according to an embodiment of the present invention. The apparatus 100 illustrated in Figure 5 is similar to the apparatus 100 illustrated in Figure 3, and the same reference numerals in Figures 3 and 5 denote the same or similar components, having the same or similar function.

Generally, at least one switching device VBC 3, 4 of the plurality of switching device VBCs 3, 4 may be connected or connectable with an electrical device, wherein the at least one switching device VBC is configured to selectively provide electrical energy from the EES module of the at least one switching device VBC to the electrical device.

In accordance with the embodiment of the present invention illustrated in Figure 5, each of switching device VBCs 3, 4 is connected with an electrical device 40, 41. As illustrated in Figure 5, the switching device VBC 3 is connected with the electrical device 41, and the switching device VBC 4 is connected with the electrical device 40. Further, in accordance with the embodiment of the present invention illustrated in Figure 5, the switching device VBCs 3 and 4 may be connected with the electrical devices 41 and 40, respectively, via converters 44 and 42, respectively. Each or any of the converters 42, 44 may for example comprise or be constituted by a DC-DC converter. The converters 42, 44 may be omitted, and hence the switching device VBCs 3 and 4 may be directly connected with the electrical devices 41 and 40, respectively.

The switching device VBC 3 may be configured to selectively provide electrical energy from the EES module 6 of the switching device VBC 3 to the electrical device 41, possibly via the converter 44. Similarly, the switching device VBC 4 may be configured to selectively provide electrical energy from the EES module 7 of the switching device VBC 4 to the electrical device 40, possibly via the converter 42.

As described herein, by means of the switching device VBCs 3, 4 of the apparatus 100, the maximum voltage that each switching device 1, 2 of the at least one series-connection of switching devices 1, 2 may be subjected to can be controlled, or limited. Additionally, in accordance with the embodiment of the present invention illustrated in Figure 5, energy in the EES modules 6, 7 of the switching device VBCs 3, 4 can be used to power electrical devices 40, 41 as needed or desired. Such functionality may be incorporated in any embodiment of the present invention.

In conclusion, an apparatus is provided, comprising a plurality of interconnected switching devices at least two of which are connected in series so as to form at least one series-connection of switching devices, and a plurality of switching device voltage balancing circuits, VBCs, each of which corresponds to and is connected to a respective switching device of the at least one series-connection of switching devices, for limiting the maximum voltage that each switching device of the at least one series-connection of switching devices is subjected to. Each of the plurality of switching device VBCs comprises an electrical energy storage, EES, module, and a resistive current path comprising at least one resistor, and at least one EES module voltage regulating circuitry, VRC, connected or connectable to the EES module, wherein the at least one EES module VRC is configured such that it conducts current therethrough in a direction towards the at least one resistor when the voltage over the at least one EES module VRC is within a predefined threshold voltage range.

While the present invention has been illustrated in the appended drawings and the foregoing description, such illustration is to be considered illustrative or exemplifying and not restrictive; the present invention is limited by the claims. **Other** variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1.    An apparatus (100) comprising:

a plurality of interconnected switching devices (1, 2), each of the switching devices being switchable between operational states including at least a conducting state and a non-conducting state, wherein at least two of the switching devices are connected in series so as to form at least one series-connection of switching devices, and wherein the apparatus is connected or connectable in a conductive path (5) for conveying a current in the conductive path via the at least one series-connection of switching devices; and

a plurality of switching device voltage balancing circuits, VBCs, (3, 4) each of which corresponds to and is connected to a respective switching device of the at least one series-connection of switching devices, for limiting the maximum voltage that each switching device of the at least one series-connection of switching devices is subjected to;

each of the plurality of switching device VBCs comprising an electrical energy storage, EES, module (6, 7) which can be charged or discharged, and a resistive current path , the resistive current path comprising a first current path (22, 23) comprising at least one resistor (26-29) and at least one EES module voltage regulating circuit, VRC (30, 31) connected or connectable to the ESS module, and a second current path (24, 25) comprising at least one resistor (32, 33) and a switching element (34, 35), the first current path and the second current path being connected in parallel, wherein the at least one EES module VRC is configured such that it conducts current therethrough in a direction towards the at least one resistor when the voltage over the at least one EES module VRC is within a predefined threshold voltage range;

wherein each of the plurality of switching device VBCs is configured such that when the corresponding switching device is in the conducting state the resistive current path becomes connected in parallel with the EES module, whereby, on a condition that the voltage of the EES module is within the predefined threshold voltage range, current is conducted such that the voltage of the EES module is decreased until the voltage of EES module is outside the threshold voltage range;

wherein the switching element of the second current path comprises at least a first terminal, a second terminal, and a third terminal and being arranged such that current may flow in a current path between the first terminal and the second terminal, and further such that the third terminal governs the electrical conductivity of the current path between the first terminal and the second terminal based on voltage at the third terminal relatively to the voltage at the second terminal, wherein the switching element is arranged such that current flows unimpeded from the first terminal to the second terminal in the current path between the first terminal and the second terminal if the voltage at the third terminal relatively to the voltage at the second terminal is within a predefined switching element threshold voltage range;

wherein on a condition that the voltage of the EES module is within the predefined threshold voltage range, current is conducted from the EES module to the at least one resistor of the first current path via the at least one EES module VRC of the first current path such that the voltage of the EES module is decreased;

wherein the switching element of the second current path is connected to the at least one resistor of the first current path such that when current is conducted in the at least one resistor of the first current path, the voltage at the third terminal relatively to the voltage at the second terminal increases, and wherein on a condition that the voltage at the third terminal relatively to the voltage at the second terminal is within the predefined switching element threshold voltage range, current is conducted from the EES module to the at least one resistor of the second current path via the switching element such that the voltage of the EES module is decreased.

2. An apparatus according to claim 1, wherein each of the plurality of switching device VBCs is configured such that when the corresponding switching device is in the non-conducting state, no current is conducted in the resistive current path of the switching device VBC.

3. An apparatus according to claim 1 or 2, wherein for each of the plurality of switching device VBCs, the at least one EES module VRC comprises at least one Zener diode, wherein the predefined threshold voltage range is defined by a value of a breakdown voltage of the at least one Zener diode.

4. An apparatus according to claim 3, wherein an end value of the predefined threshold voltage range is the value of the breakdown voltage of the at least one Zener diode.

5. An apparatus according to any one of claims 1-4, wherein the conductive path is between a first node and a second node, and the apparatus is connected or connectable in the conductive path for conveying a current from the first node to the second node via the at least one series-connection of switching devices, wherein for each of the plurality of switching device VBCs, the at least one EES module VRC is configured such that the predefined threshold voltage range includes a voltage determined by the voltage between the first node and the second node divided by the number of switching devices in the at least one series-connection of switching devices which includes the switching device which corresponds to switching device VBC.

6. An apparatus according to any one of claims 1-5, wherein the predefined threshold voltage range of the at least one EES module VRC is the same for each of the plurality of switching device VBCs.

7. An apparatus according to any of claims 1-6, wherein each of the plurality of switching device VBCs is connected in parallel with the corresponding switching device of the at least one series-connection of switching devices.

8. An apparatus according to any of claims 1-7, wherein each of the plurality of switching device VBCs comprises a one-way conducting circuitry (14, 15) connected in parallel with the resistive current path of the switching device VBC, wherein the one-way conducting circuitry is configured so as to conduct current in a direction that is opposite to the direction in which current is conducted in the resistive current path when the voltage over the at least one EES module VRC is within the predefined threshold voltage range and which is towards the EES module of the switching device VBC, thereby charging the EES module of the switching device VBC when the corresponding switching device is in the non-conducting state, and wherein the parallel connection of the one-way conducting circuitry and the resistive current path is connected in series with the EES module of the switching device VBC.

9. An apparatus according to any one of claims 1-8, wherein for each of the plurality of switching device VBCs, the switching element of the second current path comprises at least one of: a field-effect transistor, FET, wherein the predefined switching element threshold voltage range is defined by a threshold voltage of the FET, a bipolar junction transistor, BJT, wherein the predefined switching element threshold voltage range is defined by a threshold voltage of the BJT, or an insulated-gate bipolar transistor, IGBT, wherein the predefined switching element threshold voltage range is defined by a threshold voltage of the IGBT.

10. An apparatus according to any one of claims 1-9, wherein each of the plurality of switching device VBCs is connected in parallel with snubber circuitry (36, 37) comprising a series connection of (i) a parallel connection of one-way conducting circuitry (38, 39) and a resistive current path (40, 41) and (ii) at least one EES module (42, 43).

11. An apparatus according to claim 10, wherein the snubber circuitry is arranged between the switching device VBC and the switching device of the at least one series-connection of switching devices corresponding to the switching device VBC.

12. An apparatus according to any one of claims 1-11, comprising at least two series-connections of switching devices, the at least two series-connections of switching devices being connected in parallel.

13. An apparatus according to any one of claims 1-12, wherein at least one switching device of the at least one series-connection of switching devices comprises a plurality of sub-switching devices connected in parallel, each of the sub-switching devices being controllably switchable between operational states including at least a conducting state and a non-conducting state.

14. An apparatus according to any one of claims 1-13, wherein at least one switching device VBC of the plurality of switching device VBCs is connected or connectable with an electrical device (40, 41), wherein the at least one switching device VBC is configured to selectively provide electrical energy from the EES module of the at least one switching device VBC to the electrical device.

**Patentansprüche**

1. Einrichtung (100), umfassend:

eine Vielzahl von miteinander verbundenen Schaltvorrichtungen (1, 2), wobei jede der Schaltvorrichtungen zwischen Betriebszuständen umschaltbar ist, die mindestens einen leitenden Zustand und einen nichtleitenden Zustand beinhalten, wobei mindestens zwei der Schaltvorrichtungen in Reihe verbunden sind, um mindestens eine Reihenverbindung von Schaltvorrichtungen zu bilden, und wobei die Einrichtung in einem leitfähigen Pfad (5) zum Übertragen eines Stroms in dem leitfähigen Pfad über die mindestens eine Reihenverbindung von Schaltvorrichtungen verbunden oder verbindbar ist; und
eine Vielzahl von Schaltvorrichtung-Spannungsausgleichsschaltungen, Schaltvorrichtung-VBCs, (3, 4), die jeweils einer jeweiligen Schaltvorrichtung der mindestens einen Reihenverbindung von Schaltvorrichtungen entsprechen und mit dieser verbunden sind, zum Begrenzen der maximalen Spannung, der jede Schaltvorrichtung der mindestens einen Reihenverbindung von Schaltvorrichtungen ausgesetzt ist;
wobei jede der Vielzahl von Schaltvorrichtung-VBCs ein elektrisches Energiespeichermodul, EES-Modul, (6, 7), das geladen oder entladen werden kann, und einen resistiven Strompfad umfasst, wobei der resistive Strompfad einen ersten Strompfad (22, 23) umfasst, der mindestens einen Widerstand (26-29) und mindestens eine EES-Modul-Spannungsregelschaltung, EES-Modul-VRC, (30, 31), die mit dem ESS-Modul verbunden oder verbindbar ist, umfasst, und einen zweiten Strompfad (24, 25) umfasst, der mindestens einen Widerstand (32, 33) und ein Schaltelement (34, 35) umfasst, wobei der erste Strompfad und der zweite Strompfad parallel verbunden sind,
wobei die mindestens eine EES-Modul-VRC so konfiguriert ist, dass sie Strom durch diese in einer Richtung zu dem mindestens einen Widerstand leitet, wenn die Spannung über der mindestens einen EES-Modul-VRC innerhalb eines vordefinierten Schwellenspannungsbereichs liegt;

wobei jede der Vielzahl von Schaltvorrichtung-VBCs so konfiguriert ist, dass, wenn sich die entsprechende Schaltvorrichtung in dem leitenden Zustand befindet, der resistive Strompfad parallel mit dem EES-Modul verbunden wird, wobei unter einer Bedingung, dass die Spannung des EES-Moduls innerhalb des vordefinierten Schwellenspannungsbereichs liegt, Strom so geleitet wird, dass die Spannung des EES-Moduls verringert wird, bis die Spannung des EES-Moduls außerhalb des Schwellenspannungsbereichs liegt;

wobei das Schaltelement des zweiten Strompfades mindestens einen ersten Anschluss, einen zweiten Anschluss und einen dritten Anschluss umfasst und so angeordnet ist, dass Strom in einem Strompfad zwischen dem ersten Anschluss und dem zweiten Anschluss fließen kann, und ferner so, dass der dritte Anschluss die elektrische Leitfähigkeit des Strompfades zwischen dem ersten Anschluss und dem zweiten Anschluss basierend auf einer Spannung an dem dritten Anschluss relativ zu der Spannung an dem zweiten Anschluss steuert, wobei das Schaltelement so angeordnet ist, dass Strom ungehindert von dem ersten Anschluss zu dem zweiten Anschluss in dem Strompfad zwischen dem ersten Anschluss und dem zweiten Anschluss fließt, falls die Spannung an dem dritten Anschluss relativ zu der Spannung an dem zweiten Anschluss innerhalb eines vordefinierten Schaltelementschwellenspannungsbereichs liegt;

wobei unter einer Bedingung, dass die Spannung des EES-Moduls innerhalb des vordefinierten Schwellenspannungsbereichs liegt, Strom von dem EES-Modul zu dem mindestens einen Widerstand des ersten Strompfades über die mindestens eine EES-Modul-VRC des ersten Strompfades geleitet wird, sodass die Spannung des EES-Moduls verringert wird;

wobei das Schaltelement des zweiten Strompfades mit dem mindestens einen Widerstand des ersten Strompfades verbunden ist, sodass, wenn Strom in dem mindestens einen Widerstand des ersten Strompfades geleitet wird, die Spannung an dem dritten Anschluss relativ zu der Spannung an dem zweiten Anschluss zunimmt, und wobei unter einer Bedingung, dass die Spannung an dem dritten Anschluss relativ zu der Spannung an dem zweiten Anschluss innerhalb des vordefinierten Schaltelement-Schwellenspannungsbereichs liegt, Strom von dem EES-Modul zu dem mindestens einen Widerstand des zweiten Strompfades über das Schaltelement geleitet wird, sodass die Spannung des EES-Moduls verringert wird.

2. Einrichtung nach Anspruch 1, wobei jede der Vielzahl von Schaltvorrichtung-VBCs so konfiguriert ist, dass, wenn sich die entsprechende Schaltvorrichtung in dem nichtleitenden Zustand befindet, kein Strom in dem resistiven Strompfad der Schaltvorrichtung-VBC geleitet wird.

3. Einrichtung nach Anspruch 1 oder 2, wobei für jede der Vielzahl von Schaltvorrichtung-VBCs die mindestens eine EES-Modul-VRC mindestens eine Zener-Diode umfasst, wobei der vordefinierte Schwellenspannungsbereich durch einen Wert einer Durchbruchspannung der mindestens einen Zener-Diode definiert ist.

4. Einrichtung nach Anspruch 3, wobei ein Endwert des vordefinierten Schwellenspannungsbereichs der Wert der Durchbruchspannung der mindestens einen Zener-Diode ist.

5. Einrichtung nach einem der Ansprüche 1-4, wobei sich der leitfähige Pfad zwischen einem ersten Knoten und einem zweiten Knoten befindet und die Einrichtung in dem leitfähigen Pfad zum Übertragen eines Stroms von dem ersten Knoten zu dem zweiten Knoten über die mindestens eine Reihenverbindung von Schaltvorrichtungen verbunden oder verbindbar ist, wobei für jede der Vielzahl von Schaltvorrichtung-VBCs die mindestens eine EES-Modul-VRC so konfiguriert ist, dass der vordefinierte Schwellenspannungsbereich eine Spannung beinhaltet, die durch die Spannung zwischen dem ersten Knoten und dem zweiten Knoten geteilt durch die Anzahl von Schaltvorrichtungen in der mindestens einen Reihenverbindung von Schaltvorrichtungen, die die Schaltvorrichtung beinhaltet, die der Schaltvorrichtung-VBC entspricht, bestimmt wird.

6. Einrichtung nach einem der Ansprüche 1-5, wobei der vordefinierte Schwellenspannungsbereich der mindestens einen EES-Moduls-VRC für jede der Vielzahl von Schaltvorrichtung-VBCs gleich ist.

7. Einrichtung nach einem der Ansprüche 1-6, wobei jede der Vielzahl von Schaltvorrichtung-VBCs parallel mit der entsprechenden Schaltvorrichtung der mindestens einen Reihenverbindung von Schaltvorrichtungen verbunden ist.

8. Einrichtung nach einem der Ansprüche 1-7, wobei jede der Vielzahl von Schaltvorrichtung-VBCs eine Einwegleitungsschaltungsanordnung (14, 15) umfasst, die parallel mit dem resistiven Strompfad der Schaltvorrichtung-VBC verbunden ist, wobei die Einwegleitungsschaltungsanordnung so konfiguriert ist, dass sie Strom in einer Richtung leitet, die entgegengesetzt zu der Richtung ist, in der Strom in dem resistiven Strompfad geleitet wird, wenn die Spannung über die mindestens eine EES-Modu-VRC innerhalb des vordefinierten Schwellenspannungsbereichs liegt, und die zu dem EES-Modul der Schaltvorrichtung-VBC hin ist, wodurch das EES-Modul der Schaltvorrichtung-VBC geladen wird, wenn sich die entsprechende Schaltvorrichtung im nichtleitenden Zustand befindet, und wobei die Parallelverbindung der Einwegleitungsschaltungsanordnung und des resistiven Strompfades in Reihe mit dem EES-Modul der Schaltvorrichtung-VBC verbunden ist.

9. Einrichtung nach einem der Ansprüche 1-8, wobei für jede der Vielzahl von Schaltvorrichtung-VBCs das Schaltelement des zweiten Strompfades mindestens eines von Folgendem umfasst: einen Feldeffekttransistor, FET, wobei der vordefinierte Schaltelement-Schwellenspannungsbereich durch eine Schwellenspannung des FET definiert ist, einen Bipolartransistor, BJT, wobei der vordefinierte Schaltelement-Schwellenspannungsbereich durch eine Schwellenspannung des BJT definiert ist, oder einen Bipolartransistor mit isoliertem Gate, IGBT, wobei der vordefinierte Schaltelement-Schwellenspannungsbereich durch eine Schwellenspannung des IGBT definiert ist.

10. Einrichtung nach einem der Ansprüche 1-9, wobei jede der Vielzahl von Schaltvorrichtung-VBCs parallel mit einer Snubber-Schaltungsanordnung (36, 37) verbunden ist, die eine Reihenverbindung aus (i) einer parallelen Verbindung einer Einwegleitungsschaltungsanordnung (38, 39) und eines resistiven Strompfades (40, 41) und (ii) mindestens einem EES-Modul (42, 43) umfasst.

11. Einrichtung nach Anspruch 10, wobei die Snubber-Schaltungsanordnung zwischen der Schaltvorrichtung-VBC und der Schaltvorrichtung der mindestens einen Reihenverbindung von Schaltvorrichtungen entsprechend der Schaltvorrichtung-VBC angeordnet ist.

12. Einrichtung nach einem der Ansprüche 1-11, die mindestens zwei Reihenverbindungen von Schaltvorrichtungen umfasst, wobei die mindestens zwei Reihenverbindungen von Schaltvorrichtungen parallel verbunden sind.

13. Einrichtung nach einem der Ansprüche 1-12, wobei mindestens eine Schaltvorrichtung der mindestens einen Reihenverbindung von Schaltvorrichtungen eine Vielzahl von parallel verbundenen Unterschaltvorrichtungen umfasst, wobei jede der Unterschaltvorrichtungen steuerbar zwischen Betriebszuständen umschaltbar ist, die mindestens einen leitenden Zustand und einen nichtleitenden Zustand beinhalten.

14. Einrichtung nach einem der Ansprüche 1-13, wobei mindestens eine Schaltvorrichtung-VBC der Vielzahl von Schaltvorrichtung-VBCs mit einer elektrischen Vorrichtung (40, 41) verbunden oder verbindbar ist, wobei die mindestens eine Schaltvorrichtung-VBC dazu ausgelegt ist, selektiv elektrische Energie von dem EES-Modul der mindestens einen Schaltvorrichtung-VBC an die elektrische Vorrichtung bereitzustellen.

**Revendications**

1. Appareil (100) comprenant :

une pluralité de dispositifs de commutation interconnectés (1, 2), chacun des dispositifs de commutation pouvant être commuté entre des états opérationnels comprenant au moins un état conducteur et un état non conducteur, au moins deux des dispositifs de commutation étant connectés en série de manière à former au moins une connexion en série de dispositifs de commutation, et l'appareil étant connecté ou pouvant être connecté dans un chemin conducteur (5) pour acheminer un courant dans le chemin conducteur via l'au moins une connexion en série de dispositifs de commutation ; et une pluralité de circuits d'équilibrage de tension, VBC, de dispositif de commutation (3, 4), chacun correspondant et étant connecté à un dispositif de commutation respectif de l'au moins une connexion en série de dispositifs de commutation, pour limiter la tension maximale à laquelle est soumis chaque dispositif de commutation de l'au moins une connexion en série de dispositifs de commutation ; chacun de la pluralité de VBC de dispositif de commutation comprenant un module (6, 7) de stockage d'énergie électrique, EES, pouvant être chargé ou déchargé, et un chemin de courant résistif, le chemin de courant résistif comprenant un premier chemin de courant (22, 23) comprenant au moins une résistance (26-29) et au moins un circuit de régulation de tension, VRC, de module EES (30, 31) connecté ou pouvant être connecté au module ESS, et un deuxième chemin de courant (24, 25) comprenant au moins une résistance (32, 33) et un élément de commutation (34, 35), le premier chemin de courant et le deuxième chemin de courant étant connectés en parallèle,

l'au moins un VRC de module EES étant configuré de telle sorte qu'il conduit du courant à travers lui dans une direction vers l'au moins une résistance lorsque la tension sur l'au moins un VRC de module EES est dans une plage de tension seuil prédéfinie ;

chacun de la pluralité de VBC de dispositif de commutation étant configuré de telle sorte que lorsque le dispositif de commutation correspondant est dans l'état conducteur, le chemin de courant résistif devient connecté en parallèle avec le module EES, moyennant quoi, dans une condition où la tension du module EES est dans la plage de tension seuil prédéfinie, le courant est conduit de telle sorte que la tension du module EES est diminuée jusqu'à ce que la tension du module EES soit en dehors de la plage de tension seuil ;

l'élément de commutation du deuxième chemin de courant comprenant au moins une première borne, une deuxième borne et une troisième borne et étant agencé de telle sorte qu'un courant peut circuler dans un chemin de courant entre la première borne et la deuxième borne, et en outre de telle sorte que la troisième borne régit la conductivité électrique du chemin de courant entre la première borne et la deuxième borne sur la base d'une tension au niveau de la troisième borne par rapport à la tension au niveau de la deuxième borne, l'élément de commutation étant agencé de telle sorte qu'un courant circule librement de la première borne vers la deuxième borne dans le chemin de courant entre la première borne et la deuxième borne si la tension au niveau de la troisième borne par rapport à la tension au niveau de la deuxième borne est comprise dans une plage de tension seuil d'élément de commutation prédéfinie ;

dans une condition où la tension du module EES est dans la plage de tension seuil prédéfinie, le courant est conduit depuis le module EES vers l'au moins une résistance du premier chemin de courant via l'au moins un VCR de module EES du premier chemin de courant de telle sorte que la tension du module EES est diminuée ;

l'élément de commutation du deuxième chemin de courant étant connecté à l'au moins une résistance du premier chemin de courant de telle sorte que lorsqu'un courant est conduit dans l'au moins une résistance du premier chemin de courant, la tension au niveau de la troisième borne par rapport à la tension au niveau de la deuxième borne augmente, et dans une condition où la tension au niveau de la troisième borne par rapport à la tension au niveau de la deuxième borne se trouve dans la plage de tension seuil d'élément de commutation prédéfinie, un courant est conduit depuis le module EES vers l'au moins une résistance du deuxième chemin de courant par l'intermédiaire de l'élément de commutation de telle sorte que la tension du module EES est réduite.

2. Appareil selon la revendication 1, chacun de la pluralité de VBC de dispositif de commutation étant configuré de telle sorte que, lorsque le dispositif de commutation correspondant est dans l'état non conducteur, aucun courant n'est conduit dans le chemin de courant résistif du VBC de dispositif de commutation.

3. Appareil selon la revendication 1 ou 2, pour chacun de la pluralité de VBC de dispositif de commutation, l'au moins un VRC de module EES comprenant au moins une diode Zener, la plage de tension seuil prédéfinie étant définie par une valeur d'une tension de claquage de l'au moins une diode Zener.

4. Appareil selon la revendication 3, une valeur de fin de la plage de tension seuil prédéfinie étant la valeur de la tension de claquage de l'au moins une diode Zener.

5. Appareil selon l'une quelconque des revendications 1 à 4, le chemin conducteur étant entre un premier nœud et un deuxième nœud, et l'appareil étant connecté ou pouvant être connecté dans le chemin conducteur pour acheminer un courant du premier nœud au deuxième nœud via l'au moins une connexion en série de dispositifs de commutation, pour chacun de la pluralité de VBC de dispositif de commutation, l'au moins un VRC de module EES étant configuré de telle sorte que la plage de tension seuil prédéfinie comporte une tension déterminée par la tension entre le premier nœud et le deuxième nœud divisée par le nombre de dispositifs de commutation dans l'au moins une connexion en série de dispositifs de commutation qui comporte le dispositif de commutation qui correspond au VBC de dispositif de commutation.

6. Appareil selon l'une quelconque des revendications 1 à 5, la plage de tension seuil prédéfinie de l'au moins un VRC de module EES étant la même pour chacun de la pluralité de VBC de dispositif de commutation.

7. Appareil selon l'une quelconque des revendications 1 à 6, chacun de la pluralité de VBC de dispositif de commutation étant connecté en parallèle avec le dispositif de commutation correspondant de l'au moins une connexion en série de dispositifs de commutation.

8. Appareil selon l'une quelconque des revendications 1 à 7, chacun de la pluralité de VBC de dispositif de commutation comprenant une circuiterie conductrice unidirectionnelle (14, 15) connectée en parallèle avec le chemin de courant résistif du VBC de dispositif de commutation, la circuiterie conductrice unidirectionnelle étant configurée de manière à conduire un courant dans une direction opposée à la direction de conduction dans laquelle un courant est conduit dans le chemin de courant résistif lorsque la tension sur l'au moins un VRC de module EES est comprise dans la plage de tension seuil prédéfinie et qui est vers le module EES du VBC de dispositif de commutation, chargeant ainsi le module EES du VBC de dispositif de commutation lorsque le dispositif de commutation correspondant est dans l'état non conducteur, et la connexion en parallèle de la circuiterie conductrice unidirectionnelle et du chemin de courant résistif étant connectée en série avec le module EES du VBC de dispositif de commutation.

9. Appareil selon l'une quelconque des revendications 1 à 8, pour chacun de la pluralité de VBC de dispositif de commutation, l'élément de commutation du deuxième chemin de courant comprenant au moins un parmi : un transistor à effet de champ, FET, dans lequel la plage de tension seuil d'élément de commutation prédéfinie est définie par une tension seuil du FET, un transistor à jonction bipolaire, BJT, dans lequel la plage de tension seuil d'élément de commutation prédéfinie est définie par une tension seuil du BJT, ou un transistor bipolaire à grille isolée, IGBT, dans lequel la plage de tension seuil d'élément de commutation prédéfinie est définie par une tension seuil de l'IGBT.

10. Appareil selon l'une quelconque des revendications 1 à 9, chacun de la pluralité de VBC de dispositif de commutation étant connecté en parallèle avec un circuit amortisseur (36, 37) comprenant une connexion en série (i) d'une connexion en parallèle d'une circuiterie conductrice unidirectionnelle (38, 39) et d'un chemin de courant résistif (40, 41) et (ii) d'au moins un module EES (42, 43).

11. Appareil selon la revendication 10, le circuit amortisseur étant agencé entre le VBC de dispositif de commutation et le dispositif de commutation de l'au moins une connexion en série de dispositifs de commutation correspondant au VBC de dispositif de commutation.

12. Appareil selon l'une quelconque des revendications 1 à 11, comprenant au moins deux connexions en série de dispositifs de commutation, les au moins deux connexions en série de dispositifs de commutation étant connectées en parallèle.

13. Appareil selon l'une quelconque des revendications 1 à 12, au moins un dispositif de commutation de l'au moins une connexion en série de dispositifs de commutation comprenant une pluralité de sous-dispositifs de commutation connectés en parallèle, chacun des sous-dispositifs de commutation pouvant être commuté de manière commandée entre des états opérationnels comportant au moins un état conducteur et un état non conducteur.

14. Appareil selon l'une quelconque des revendications 1 à 13, au moins un VBC de dispositif de commutation de la pluralité de VBC de dispositif de commutation étant connecté ou pouvant être connecté à un dispositif électrique (40, 41), l'au moins un VBC de dispositif de commutation étant configuré pour fournir sélectivement de l'énergie électrique depuis le module EES de l'au moins un VBC de dispositif de commutation au dispositif électrique.

Fig. 2

Fig. 1

Fig. 3

Fig. 4

Fig. 5

EP 4 432 537 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5946178 A
- EP 1145411 A